Europäisches Patentamt

European Patent Office

Office européen des brevets

(19)

(11) Publication number: **0 210 324**
A1

# (12) EUROPEAN PATENT APPLICATION

(21) Application number: 86101549.3

(22) Date of filing: 06.02.86

(51) Int. Cl.⁴: **B 62 D 1/10**
**B 60 R 25/02**

(30) Priority: 11.04.85 IT 8335685

(43) Date of publication of application:
04.02.87 Bulletin 87/6

(84) Designated Contracting States:
AT BE CH DE FR GB LI LU NL SE

(71) Applicant: Carli, Diego
14 Via Brugnera
I-31010 Francenigo (Treviso)(IT)

(72) Inventor: Carli, Diego
14 Via Brugnera
I-31010 Francenigo (Treviso)(IT)

(74) Representative: D'Agostini, Giovanni, Dr.
n. 17 via G.Giusti
I-33100 Udine(IT)

(54) Detachable steering wheel.

(57) The steering wheel (B) can be fitted to or released from the steering column (1) by locking means (b) to prevent theft of the car.

FIG.1

EP 0 210 324 A1

Description of the invention "Detachable steering wheel";

---

The present invention relates to a detachable steering wheel.

The invention is particularly suitable as it secures the non-removal of a vehicle and, therefore, antitheft security; for example to parked earth and sea vehicles.

At the present state of the art, fixed or detachable steering wheels are well known, but it takes time and great skill to assemble and disassemble the second ones.

The drawbacks of the currently used solutions and of the above-mentioned prior art are as follows:

The steering wheel cannot be detached unless by resorting to mechanical intercvention and special tool fittings (unbolting, etc.); moreover, any parked vehicle can, after being started, be stolen very easily (everybody knows how often this happens on account of thieves' skill and modern technique).

The invention as claimed is intended to provide a remedy to the above-mentioned drawbacks. It solves the problem providing a steering wheel which can be manually and easily inserted and detached without using mechanical equipment, tools or fittings. It consists of a steering wheel with a central supporting hub which can be fixed to the steering column, being said central supporting hub equipped with fixing-in tooth means, to which said steering wheel, by a respective holed central flange plate, can be fixed by transversal sliding locking movement after controlling key axial insertion, being said sliding locking movement operated by a single slipping screw manually actuated. Its screwing and unscrewing result in the locking and unlocking of the steering wheel on said fixing tooth means. This enables that, after parking, the steering wheel can be easily released and detached, so making the vehicle useless without this basical fitting.

One way of carrying out this invention is described in detail below with reference to drawings which illustrate only one specific embodiment in which:

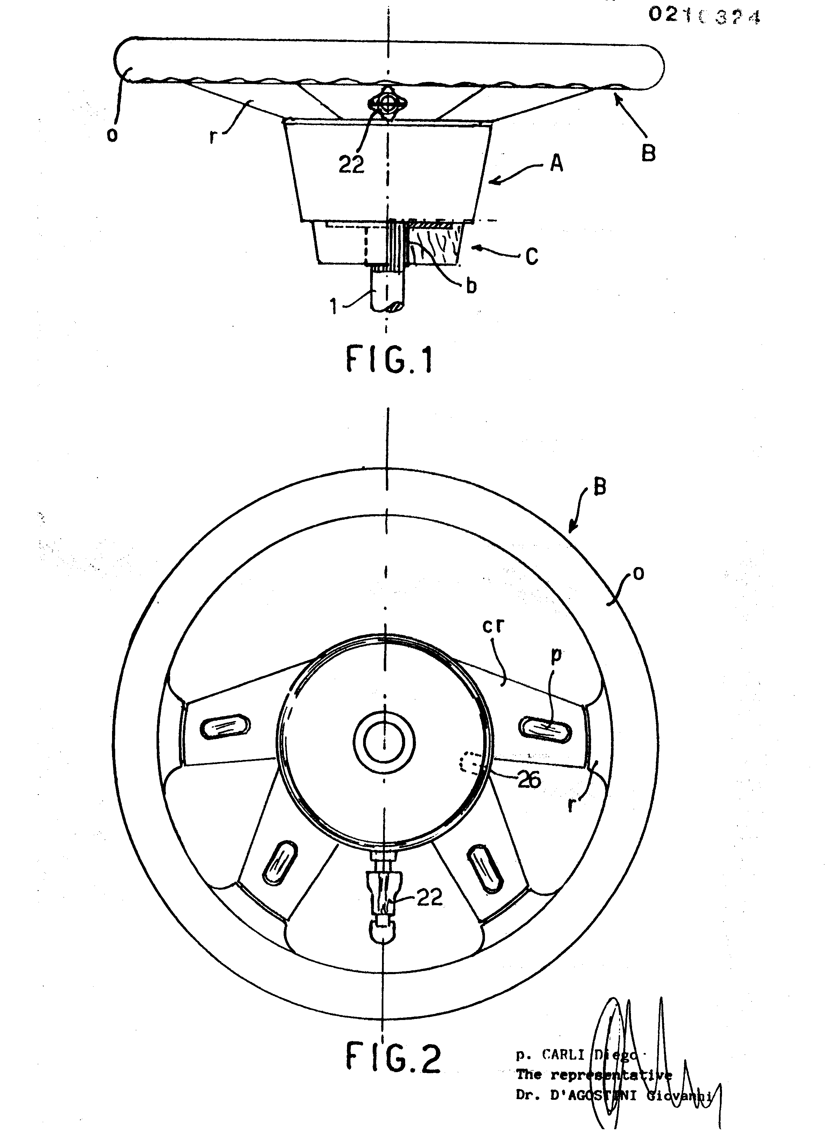

Fig. 1 is a side view of the assembled steering wheel in driving condition in accordance with this invention.

Fig. 2 is a top view of the steering wheel represented in fig. 1.

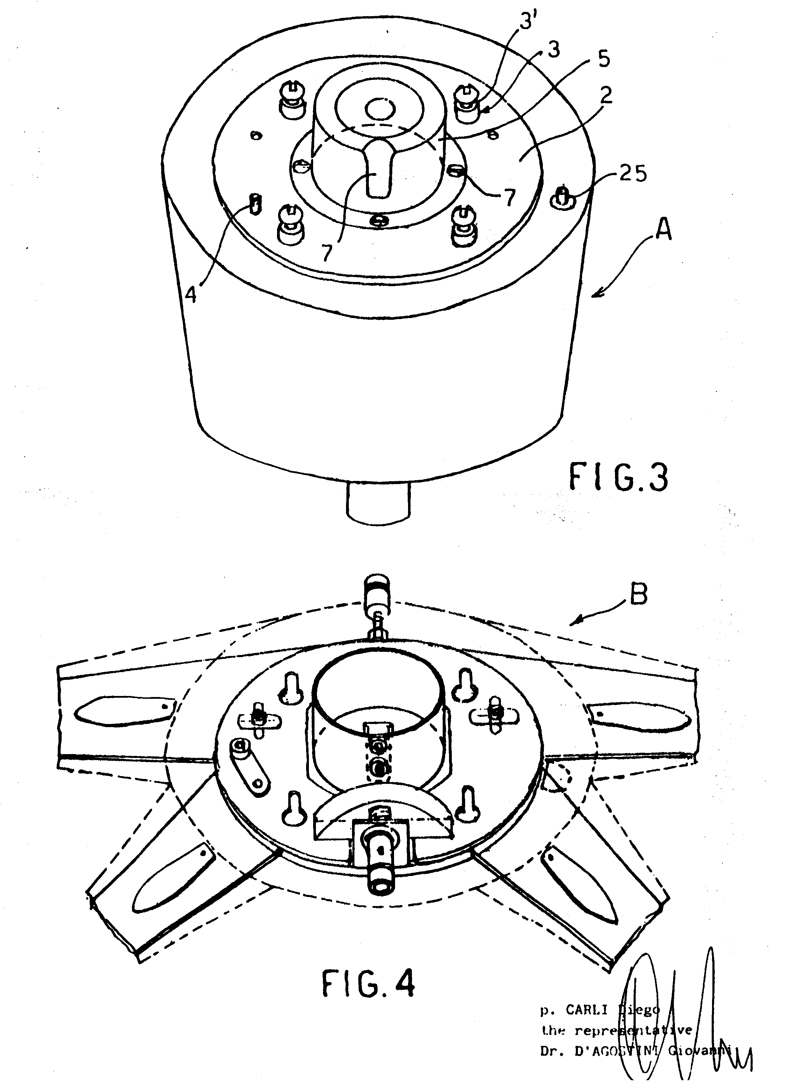

Fig. 3 is a perspective view of the central supporting hub fixed to the steering column.

Fig. 4 is a perspective view of the central portion of the steering wheel fixed to the respective central supporting hub.

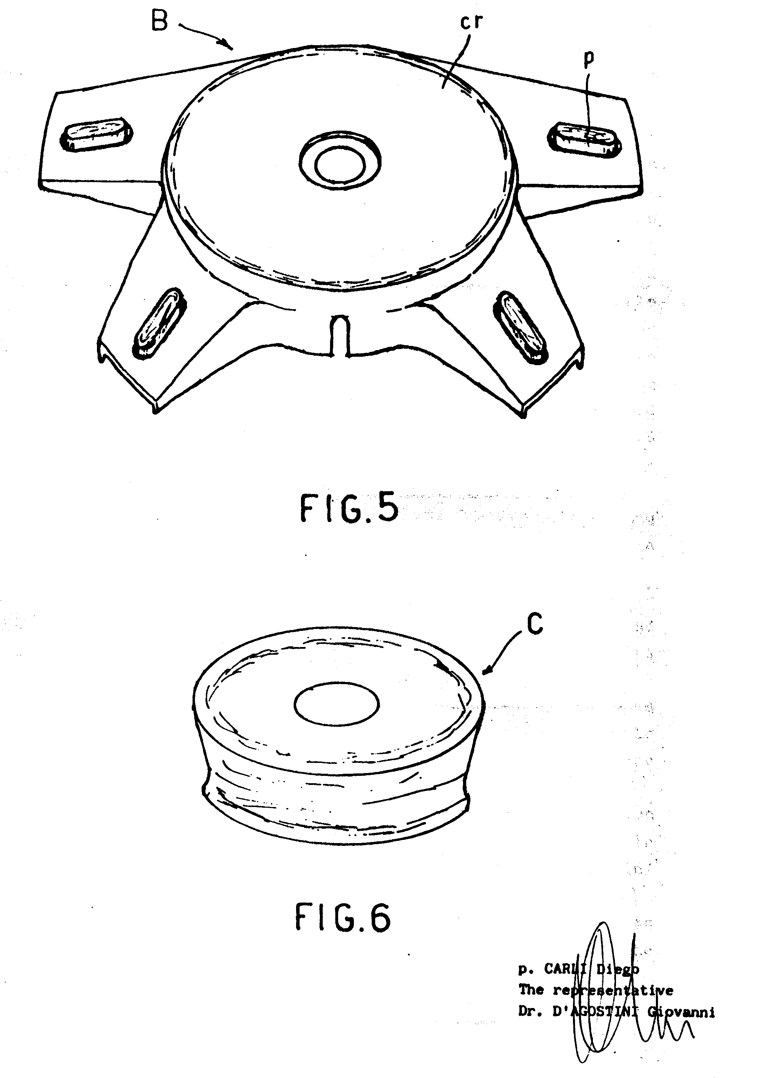

Fig. 5 is a perspective view of the central portion of the steering wheel as represented in Fig.4, with spoke cover.

Fig. 6 is a perspective view of an intermediate anular connecting element to enable the central supporting hub to be joined to the steering column.

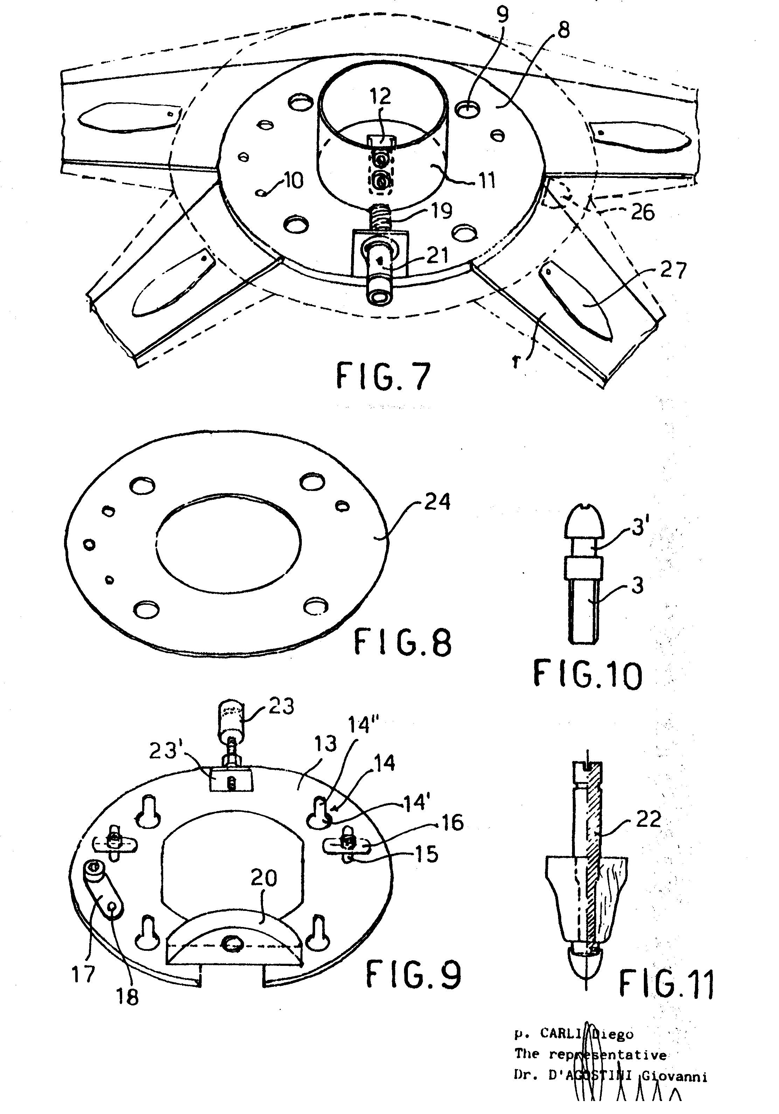

Figs. 7,8,9 show the component parts of the detachable steering wheel represented in fig. 4.

Fig. 10 is a front view of one stud locking tooth to be screwed on said central supporting hub.

Fig. 11 is a partial section view of the key that enable the steering wheel to be locked on the respective central supporting hub.

In accordace with said Figures the designed steering wheel of this invention consits of the following basic component parts:

a central supporting hub (A), a steering wheel (B) detachable from said central supporting hub (A) and an intermediate anular connecting element (C). The central supporting hub (A) is fixed to the vehicle steering column (1) by means of a bushing-flange connector (b). The central supporting hub comprises a supporting flange (2), to which steel locking stud tooth means

(3) utilized for the fixing of the steering wheel (B), which are adjusted in height and then fixed by a lock nut so as to prevent the steering wheel (B) from moving. Moreover, there is stud key tooth which is a security device key which enables the steering wheel insertion in order to avoid a faulty fixing of the steering wheel (B) to the steering column (1), in case it is not perfectly positioned. Said stud key tooth position can be changed, so preventing the insertion of another steering wheel, even if structurally equal. Into the central part of said central supporting hub (A), a detachable steering wheel supporting means (5) is inserted. This steering wheel supporting means is fixed with screws (6) that are screwed on the opposed steering column bushing flange, and it enables the extraction of the central supporting hub (A) from the vehicle steering column (1). The steering wheel supporting means is slot-drilled to realize a longitudinal groove (7) which is designed to facilitate the steering wheel insertion (B) always keeping it in the same position in relation to the steering axle. This groove enables a greater twist holding of said steering wheel connection. Said steering wheel or detachable part (B) has a ring shape (o), with central linking spokes (r) and spoke cover (cr) enclosing respective push buttons (p) and is characterized by a collared flange (8) fitted with holes (9) of the same diameter of the stud locking tooth means (3), and by a hole (10) corresponding to the steering wheel security key tooth (4). On the collared flange (8) there is a coupling (11) which slides on the steering wheel supporting means by means of a guide key (12), which is perfectly inserted into the steering wheel supporting means groove (7). Said key (12) is used to facilitate the insertion of the steering wheel in the same position to the steering axle and with a greater twisting resistance. On the steering wheel collared flange (8), there is a steel locking flange (13) which transversally slides on the respective and corresponding locking stud tooth means (3) inserted into the holes (14).

Said holes (14) are characterized in that they have an enlarged circular hole (14') for the head insertion of said locking stud tooth means and a slot (14") for the sliding and locking in the respective locking stud tooth neck (3'). Said locking flange (13) is guided by grooves (15), sliding in corresponding screws fixed to the steering wheel central flange (8), and to which it is kept adherent by means of springs (16). Moreover, a spring (17) with a pivot (18) is fixed to the locking flange (13), corresponding to the key tooth (4) that releases the locking flange in an open position.

Said locking flange (13) is operated in its sliding movement by a locking screw (19) which can be screwed and unscrewed within a suitably threaded seat of a square (20). In its screwing and unscrewing, the locking screw is supported by a lever flask (21) fixed to the steering wheel flange (8), and is set in operation by a detachable key fitted with a hand grip (22), which, once detached, prevents any inappropriate use. Always to said locking flange (13) supported by a little flask (23') is fixed an adjustable knob (23), whose possible jutting indicates whether the steering wheel (B) is locked or unlocked. Moreover, under the locking flange there is a differentiated thickness flask (24) which facilitates the steering wheel sliding. On the fixed part or supporting hub (A), there is a mobile contact (25) which lies on a fixed contact (26) under the steering wheel (B) cover spoke (cr) in order to be linked with push-button-switch (p). the push buttons (p) are linked among them and enable separately the electric horn operation both by pushing and contact with respective mass blades (27). Instead of being moved transversally, the locking flange (13) can also be rotated and the whole respective device results in an upsidedown position, namely the finxing device placed in the steering wheel (B) can be inserted into the fixed part or central supporting hub (A).

The device in accordance with this invention works as follows:

once the central supporting hub (A) is fixed by means of the bushing-flange connector (b) to the vehicle steering column (1), the steering wheel (B) is inserted into and locked by means of said locking key, and then it is detached reversing the process.

The great advantages of this invention consist in that the steering wheel is detached from the parked vehicle, which cannot be used, and so it is also an antitheft security; the steering wheel is inserted again when it has to be used.

Obviously the details in the realization can be different without bringing about any change in the protection field of the invention characterized in the following claims.

Claims:

1. Steering wheel characterized in that it is designed to be inserted into and released from the steering column.

2. Steering wheel in accordance with the previous claim, characterised in that it can be inserted into and released from a central supporting hub (A) fixed to the steering column.

3. Steering wheel in accordance with the previous claim, characterised in that it consits of a central supporting hub fitted with respective connection electric means (A) and a steering wheel which can be fixed as a real steering wheel (B) to said central supporting hub.

4. Steering wheel in accordance with the previous claims, characterised in that said central supporting hub (A) is fixed to the steering column (1) by means of a bushing-flange connector (b).

5. Steering wheel in accordance with the previous claims, characterised in that it is fitted with a bushing-flange connector cover ring (C).

6. Steering wheel in accordance with the previous claim, characterised in that the central supporting hub (A) is fitted with a supporting flange (2), to which stud locking tooth means (3) equipped with a groove (3') are fixed.

7. Steering wheel in accordance with the previous claim, characterised in that the steering wheel (B) is hooked and fixed to said stud locking tooth means (3).

8. Steering wheel in accordance with the previous claim, characterised in that on said central supporting hub (A) a security key tooth means (4) is placed, which releases a security device to prevent a faulty fixing of the steering wheel (B) when it is not perfectly positioned.

9. Steering wheel in accordance with the previous claim, characterised in that a detachable steering wheel supporting means (5) is inserted into the central part of the central supporting hub (A) fixing the ensemble with screw means (6).

10. Steering wheel in accordance with the previous claim, characterised in that the central supporting hub (A) extraction from the steering column (1) takes place after the detachable steering wheel supporting means (5) has been detached.

11. Steering wheel in accordance with the previous claim, characterised in that the detachable steering wheel supporting means (5) is fitted with a groove (7).

12. Steering wheel in accordance with the previous claim, characterised in that the groove (7) provides a guide for the steering wheel (B) insertion, while always keeping it in the same position in relation to the steering axle.

13. Steering wheel in accordance with the previous claim, characterised in that the steering wheel (B) has a ring shape (o) and is fitted with central linking spokes (r).

14. Steering wheel in accordance with the previous claim, characterised in that the steering wheel (B) is completed with spoke covers (cr) fitted with respective push buttons (p).

15. Steering wheel in accordance with the previous claim, characterised in that the steering wheel (B) is fitted with a collared flange (8) equipped with holes (9) of the same diameter of the stud locking tooth means (3) and with a hole (10) corresponding to the security key tooth means (4).

16. Steering wheel in accordance with the previous claim, characterised in that the security key tooth means (4) locks and releases the security device of the central supporting hub (A).

17. Steering wheel in accordance with the previous claim, characterised in that on the collared flange (8) there is a coupling (11) which slides on the detachable steering wheel supporting means with a guide key (12) which is inserted into the detachable steering wheel supporting means groove (7).

18. Steering wheel in accordance with the previous claim, characterised in that the locking key (12) is fixed into the groove (12).

19. Steering wheel in accordance with the previous claim, characterised in that on the steering wheel collared flange (8), there is a sliding locking flange (13) fitted with locking holes (14).

20. Steering wheel in accordance with the previous claim, characterised in that the locking holes (14) consist of enlarged circular holes (14') which tend to a slot shape (14").

21. Steering wheel in accordance with the previous claim, characterised in that the steering wheel (B) is inserted into and fixed to the central supporting hub (A) by means of a sliding locking flange (13) which is inserted into and fixed to the respective neck stud locking tooth means (3,3') by means of the locking holes (14' 14").

22. Steering wheel in accordance with the previous claim, characterised in that the locking flange (13) is guided along respective grooves (15) by screws fixed to the collared flange (8), and in that it is kept adherent to the collared flange (8) by means of springs (16).

23. Steering wheel in accordance with the previous claim, characterised in that a spring (17) fitted with a pivot (18) corresponding to the key tooth (4) is fixed to the locking flange (13).

24. Steering wheel in accordance with the previous claim, characterised in that the locking flange (13) is inserted into and locked by means of a locking screw (19) which can be screwed and unscrewed on the steering wheel.

25. Steering wheel in accordance with the previous claim, characterised in that in its screwing and unscrewing the locking screw (19) is fixed to a lever flask (21) fixed to the steering wheel collared flange (8).

26. Steering wheel in accordance with the previous claim, characterised in that the locking screw (19) is set in operation by a locking key fitted with a detachable hand grip (22).

27. Steering wheel in accordance with the previous claim, characterised in that an adjustable knob (23), which indicates the locking or unlocking of the steering wheel (B) from the central supporting hub (A), is fixed to said locking flange (13) which is supported by a little flask (23').

28. Steering wheel in accordance with the previous claim, characterised in that under the locking flange there is a differentiated thickness flange (24).

29. Steering wheel in accordance with the previous claim, characterised in that on the central supporting hub (A) there is a actuating horn switch (25) which is actuated by an actuating means in the respective steering wheel (26).

30. Steering wheel in accordance with the previous claim, characterised in that the actuating means are actuated by buttons (p) in the spoke cover, which are linked among them and which separately contact a respective mass blades (27) in the steering whhel when pushed.

31. Steering wheel in accordance with the previous claim, characterised in that the locking flange (13) for the fixing in of the stud locking tooth means (3) moves in a rotational direction.

32. Steering wheel in accordance with the previous claim, characterised in that the steering wheel is placed in the supporting central hub (A) or viceversa.

Udine, 10.4.85.

p. Carli Diego

The Representative

Dr. Giovanni D'Agostini

# FIG.1

# FIG.2

3'
3
5
2
25
7
7
4
A

# FIG.3

B

# FIG.4

FIG.5

FIG.6

p. CARLI Diego
The representative
Dr. D'AGOSTINI Giovanni

FIG. 7

FIG. 8

FIG. 10

FIG. 9

FIG. 11

p. CARLI Diego
The representative
Dr. D'AGOSTINI Giovanni

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | EP-A-0 128 786 (MARTINS) <br> * whole document * | 1-3 | B 62 D 1/10 <br> B 60 R 25/02 |
| A | | 6,7,13 ,29 | |
| | --- | | |
| X | DE-C-1 015 704 (LENKRADWERK G. PETRI) <br> * whole document * | 1,2 | |
| | --- | | |
| X | DE-C- 409 604 (FRIES et al.) <br> * whole document * | 1,2 | |
| | --- | | |
| X | AT-B- 154 251 (STANZEL et al.) <br> * whole document * | 1,2 | |
| | --- | | TECHNICAL FIELDS SEARCHED (Int Cl 4) |
| A | DE-A-3 400 609 (VOLKSWAGEN) <br> * figure 1 * | 4,5 | B 62 D 1/00 <br> B 60 R 25/00 |
| | ----- | | |

The present search report has been drawn up for all claims

| Place of search | Date of completion of the search | Examiner |
|---|---|---|
| BERLIN | 08-12-1986 | KRIEGER P O |

CATEGORY OF CITED DOCUMENTS

X : particularly relevant if taken alone
Y : particularly relevant if combined with another document of the same category
A : technological background
O : non-written disclosure
P : intermediate document

T . theory or principle underlying the invention
E : earlier patent document, but published on, or after the filing date
D . document cited in the application
L : document cited for other reasons

& . member of the same patent family, corresponding document

EPO Form 1503 03 82